# EUROPEAN PATENT APPLICATION

(11) **EP 3 435 303 A1**
(43) Date of publication of application: **30.01.2019**
(21) Application number: 18185165.0
(22) Date of filing: 24.07.2018
(51) Int. Cl.: G06Q 10/06, G06F 17/30

(54) **METHOD FOR USING SIGNIFIERS FOR DATA INTEGRATION IN RAIL AUTOMATION**

(30) Priority: 25.07.2017 AT 506182017
(71) Applicant: Siemens AG Österreich, 1210 Wien (AT)
(72) Inventor: Wurl, Alexander, 1030 Wien (AT); Falkner, Andreas, 1140 Wien (AT); Haselböck, Alois, 3392 Schönbühel-Aggsbach (AT)
(74) Representative: Maier, Daniel Oliver

(57) **Abstract**

In Rail Automation, planning future projects requires the integration of business-critical data from heterogeneous data sources. As a consequence, data quality of integrated data is crucial for the optimal utilization of the production capacity. Unfortunately, current integration approaches mostly neglect uncertainties and inconsistencies in the integration process in terms of railway specific data. To tackle these restrictions, according to the invention a semiautomatic process for data import is proposed, where the user resolves ambiguous data classifications. The task of finding the correct data warehouse classification of source values in a proprietary, often semi-structured format is supported by the notion of a signifier, which is a natural extension of composite primary keys.

In a case study from the domain of asset management in Rail Automation it has been evaluated, that this approach facilitates high-quality data integration while minimizing user interaction.

## Description

The invention is related to a method for using signifiers for data integration in rail automation by means of a computer program.

In order to properly plan the utilization of production capacity, e.g., in a Rail Automation factory, information from all business processes and project phases must be taken into account.

Sales people scan the market and derive rough estimations of the number of assets (i.e. producible units) of various types (e.g. control units for main signals, shunting signals, distant signals, etc.) which may be ordered in the next few years. The numbers of assets get refined phase by phase, such as bid preparation or order fulfillment. Since these phases are often executed by different departments with different requirements and interests (e.g. rough numbers such as 100 signals for cost estimations in an early planning phase, vs. detailed bill-of-material with sub-components such as different lamps for different signal types for a final installation phase), the same assets are described by different properties (i.e. with - perhaps slightly - different contents) and in different proprietary formats (e.g. spreadsheets or XML files) .

Apart from the technical challenges of extracting data from such proprietary structures, heterogeneous representations hinder the process of mapping and merging information which is crucial for a smooth overall process and for efficient data analytics which aims at optimizing future projects based upon experiences from all phases of previous projects. One solution approach is to use a data warehouse and to map all heterogeneous data sets of the different departments to its unified data schema.

To achieve high data quality in this process, it is important to avoid uncertainties and inconsistencies while integrating data into the data warehouse. Especially if data includes information concerning costs, it is essential to avoid storing duplicate or contradicting information because this may have business-critical effects. Part of the information can be used to identify corresponding data in some way (i.e. used as key), part of it can be seen as relevant values (such as quantities and costs). Only if keys of existing information objects in the data warehouse are comparable to that one of newly added information from heterogeneous data sets, that information can be stored unambiguously and its values are referenced correctly.

Keys are formed from one or many components of the information object and are significant for comparing information of heterogeneous data sets with information stored in the data warehouse. If two of such keys do not match, this is caused by one of two significantly different causes: (i) two objects should have the same key but they slightly differ from each other, and (ii) two objects really have different keys. Using solely heuristic lexicographical algorithms (Cohen et al., 2003) to automatically find proper matches does not necessarily succeed to reliably distinguish those two cases because each character of the key might be important and have a deeper meaning, or not. Inappropriate heuristics lead to wrong matching results, which may have major consequences to business. Therefore it is critical to rely on semantics for matching algorithms.

The invention addresses data integration scenarios where values from highly heterogeneous data sources are merged into a conjoint data warehouse. In order to avoid duplicate and contradicting data in the data warehouse, corresponding information from different data sources needs to be identified. Unfortunately, there are no global IDs available to identify information objects over different data sources. Instead, computing keys from the different data representations in the sources allows to match them with keys which are already stored in the data warehouse.

It is therefore a task of the invention, to provide a method for improving data quality in data integration processes.

According to the invention this task is performed with a method for using Signifiers for Data Integration in Rail Automation to increase quality of integrated data by means of a computerprogram, comprising a semi-automatic process for data import, wherein the task of finding the correct data warehouse classification of source values in a proprietary, often semi-structured format is supported by the notion of a signifier, which is a natural extension of composite primary keys.

It has been evaluated, that this approach facilitates high-quality data integration while minimizing user interaction.

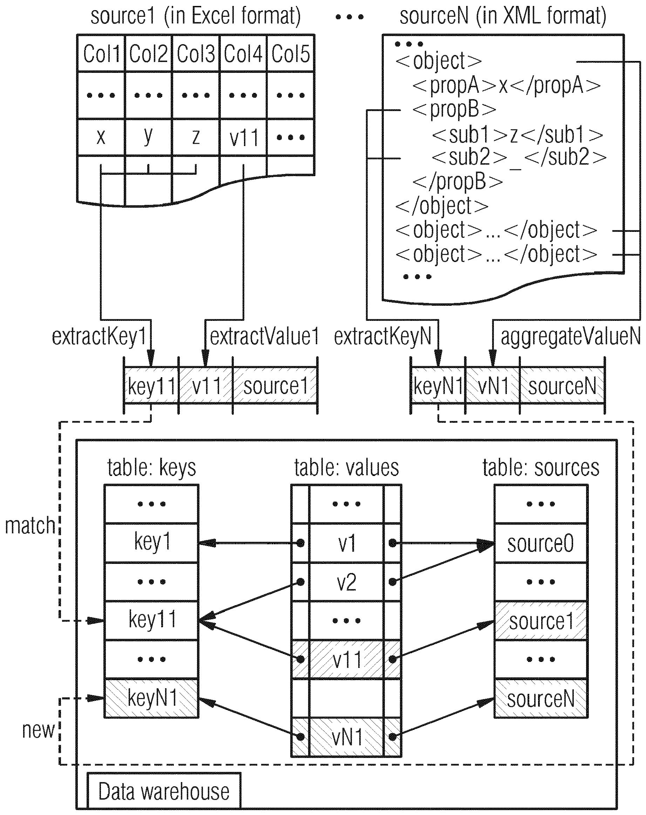

Figure 1 shows the setting and the issues in more detail.

One typical format is spreadsheets (such as Microsoft Excel) where each row represents an information object, e.g., the expected quantity from a planning phase. "Source1" in Figure 1 has five columns where the first three are used to compute a key (by function "extractKey1") and the fourth column (selected by function "extractValue1") contains a relevant value, e.g., the quantity in form of a numerical value.

Another format is XML which contains structured objects (such as representations of physical objects), e.g., a bill of materials from an installation phase. "SourceN" in Figure 1 shows some objects. Each object consists of sub-elements in which all information of the corresponding object is included - either for use in keys (accessed by function "extractKeyN") or for values. In this example, the value is not selected directly, but aggregated from all objects with the same key (using aggregation function "aggregateValueN"), e.g., by counting all those object instances to derive their quantity as a numerical value.

The essence of each data source can be seen as a set of triples, containing a key, a value, and the source identifier. As an intermediate representation, those triples are merged into the data warehouse which comprises the history of all values with references to data sources and keys. The keys are necessary to map different data representations of the same information from different data sources onto each other. If a key from a triple matches an existing key, the latter is reused, e.g., "key11" for the triple from "source1" in Figure 1. Else, a new key is added to the data warehouse, e.g., "keyN1" for the triple from "sourceN". This means that the new information does not correspond to other information in the data warehouse.

Data cleansing, also known as data cleaning, is an inevitable prerequisite to achieve data quality in the course of an ETL-process (Bleiholder and Naumann, 2009). Naumann describes data cleansing as use case of data profiling to detect and monitor inconsistencies (Naumann, 2014). Resolving inconsistencies as part of the transformation phase has been a topic for the last two decades (Leser and Naumann, 2007; Sharma and Jain, 2014).
In the work of (Rahm and Do, 2000; Naumann, 2014) tasks for ensuring data quality are classified; various data cleaning techniques have been proposed such as rule-based (Dallachiesa et al., 2013; Fan and Geerts, 2012), outlier detection (Dasu and Johnson, 2003; Hellerstein, 2008), missing values (Liu et al., 2015), and duplicate detection (Bilenko and Mooney, 2003; Wang et al., 2012). Most of these techniques require human involvement.

The work of (Müuller and Freytag, 2005; Krishnan et al., 2016) points out that integrating data is an iterative process with user interaction. Various approaches take this into consideration. Frameworks proposed in (Fan et al., 2010; Khayyat et al., 2015) enable the user to edit rules, master data, and to confirm the calculations leading to correct cleaning results. A higher detection accuracy in duplicate detection by a hybrid human-machine approach is achieved in the work of (Wang et al., 2012). As presented in (Liu et al., 2015), numerous techniques are used to associate the data to get useful knowledge for data repairing, e.g., calculating similarities of contextual and linguistic matches being able to determine relationships. In (Volkovs et al., 2014) a logistic regression classifier learns from past repair preferences and predicts the type of repair needed to resolve an inconsistency.
While these techniques and frameworks focus on representing objects syntactically correctly, rather than considering its substantial meaning, i.e., evaluating whether properties of assets are assigned correctly, this means that, for instance, real-world objects in our scenario are redundantly represented due to content-related duplicates.
As (Dai et al., 2016) reports that - although there are various data profiling tools to improve data quality - if people use them without having in mind a clear quality measurement method according to their needs, they are challenged by limited performance and by unexpectedly weak robustness. (Gill and Singh, 2014) claims that various frameworks offer the integration of heterogeneous data sets but a framework for quality issues such as naming conflicts, structural conflicts, missing values, changing dimensions has not been implemented in a tool at one place yet.
The work of (Gottesheim et al., 2011) analyzes the representation of real-world objects in the context of ontology-driven situations. Similar to how real-world objects are characterized by attributes, in (Langer et al., 2012) the characteristics of models are described by a signifier. Basically, the concept of a signifier has its origin in the domain of model-driven engineering (MDE) where a signifier enhances the versioning system by describing the combination of features of model element types that convey the superior meaning of its instances. A signifier improves versioning phases in comparing and merging models leading to a higher quality of finally merged models. As we integrate objects from different sources, a signifier structures the combination of properties and finally improves data integration when objects to be integrated are compared and merged with objects in the data warehouse. Similarly, the work of (Papadakis et al., 2015) addresses real-world entities
with blocking approaches based on schema-agnostic and schema-based configurations.

A schema-based approach may be an alternative to signifiers but with precision limitations in terms of a superior number of
detected duplicates when comparing properties. On the other hand, a schema-agnostic approach may skip
differing important information of real-world objects when clustering similar properties. In the integration process of objects, signifiers (1) provide a careful and flexible identification structure for properties, and (2) support normalization of information in the data warehouse.

According to the invention a strategic technique in the ETL-process is used to instantly react on potential inconsistencies, e.g., when there is not a perfect match of a source object with an object in the data warehouse. Instead of names or IDs, the concept of signifiers is used and extended, as introduced in (Langer et al., 2012), for mapping an object of a data source to the right object type in the data target (the data warehouse). In simple terms, a signifier is an object consisting of different components. To check if two objects match, the components of their signifiers are checked pairwise.

To cope with the usage of different wordings or words in different languages in the data source, two versions of signifiers are used: a source signifier and a target signifier which is extended by aliases.

Definition. A Source Signifier is an n-tuple of strings. The term Si refers to the ith component of a source signifier S.

The meaning of each element of the signifier is determined by its position in the tuple. In the railway asset management example described in section 1, we use signifiers of length 3, representing category, subcategory and subsubcategory, respectively. Example: ("Signal", "Main Signal", "8 Lamps").

Definition. A Target Signifier is an n-tuple of sets of strings. The term Ti refers to the ith component of a target signifier T.

Target signifiers allow to specify more than one string per component. These strings represent aliases. Example: (f"Signal", "S"g, f"Main Signal", "MainSig", "Hauptsignal", "HS"g, f"8", "8 Lamps", "8lamps"g)

The main task of integrating a new object from a data source into a target data warehouse is to match source and target signifiers. To be able to deal with approximate matches, too, a distance function dist(s; t) is used, returning a value from [0;1], where 0 means that the two strings s and t are equal. There are many well-studied string metrics that can be used here - see, e.g., (Cohen et al., 2003). Given a string distance function dist(:; :), we define the minimum distance of a string s and a set of strings ts by: distmin(s; ts) = min i=1..|ts| dist(s; tsi).

In order to express different significances of different components of a signifier, weight factors wi are used for each component i. The total sum of all weighted components of a signifier is 1. In Section 5, the weighting of the components is demonstrated.

Definition. Let S be a source signifier and T be a target signifier with n components. Let dist(:; :) be a string distance function. Let wi be component weights. The function Dist(S,T) returns a value from [0;1] and is defined in the following way: Dist(S;T) = ∑ i=1..n distmin(Si;Ti) *wi

Now you are in the position to formally define perfect and approximate matches.

Definition. Let S be a source signifier and T be a target signifier. S and T perfectly match, if and only if Dist(S;T) = 0. For a given threshold value t (0 < t < 1), S and T approximately match, if and only if 0 < Dist(S;T) t.

The algorithm of integrating a source data object into the target database (data warehouse) is a semi-interactive task based on the previously defined perfect and approximate matches. If a perfect match is found, the new object is automatically assigned to the target data warehouse. In all other cases, the user is asked to decide what to do. The following steps summarize this algorithm for adding a source object with signifier S to a target database with existing target signifiers TS:
1. If you find a T 2 TS that is a perfect match to S, add the new object to the target database using T. Done.
2. Let TSapprox be the (possibly empty) set of target signifiers that are approximate matches to S. Ask the user for a decision with the following options:
   (a) Accept one T 2 TSapprox as match. The new object will be added to the target database using T. The aliases of T are updated in the target database by adding all components of S, that do not fully match, to the aliases in T.
   (b) Accept S as a new target signifier. The new object will be added to the database and S will be added to the target signifiers.
   (c) Abort import process and fix the source database.

Each import of a data source potentially increases and completes the number of target signifiers or accordingly the aliases of target signifiers. In that, user interaction will decrease over time and the import of source data will get closer and closer to run fully automatically.

Can signifiers minimize the incorrect classification of objects?
Yes, according to the test results, the method is capable to achieve high values of precision and recall values. Compared to the "perfect match only" scenario (t = 0) with its perfect precision, approximate matches showed a weaker precision but a much better recall and therefore a better F-measure.

Can the import process based on signifiers minimize user interactions?
Yes, provided that automated matches should only be made based on a perfect match, the number of user interactions were minimal in the sense that the user was not asked for a similar match twice. Furthermore, the list presented to the user for a manual match was sorted by match distance; in most cases the user found his/her match on the first or second place in that list.

From an implementation point of view, how easily can conventional (composite) primary keys of objects in a data warehouse be extended to signifiers?
Instead of using data tables with composite keys in the data warehouse, signifiers are stored in a separate table with a generated key for referencing from data tables. Design and implementation of this separate signifier table is straightforward.

## Claims

1. Method for using Signifiers for Data Integration in Rail Automation to increase quality of integrated data by means of a computerprogram, comprising a semi-automatic process for data import, wherein the task of finding the correct data warehouse classification of source values in a proprietary, often semi-structured format is supported by the notion of a signifier, which is a natural extension of composite primary keys.
